# EUROPÄISCHE PATENTANMELDUNG

(11) **EP 4 099 503 A1**
(43) Veröffentlichungstag der Anmeldung: **07.12.2022**
(21) Anmeldenummer: 22175391.6
(22) Anmeldetag: 25.05.2022
(51) Int. Cl.: H01Q 7/00, H04B 5/00

(54) **RFID/NFC-ANTENNENVORRICHTUNG ZUM AUSLESEN UND/ODER KOMMUNIKATION EINES RFID/NFC-TAGS IN EINER BELIEBIGEN DREI-DIMENSIONALEN POSITION ODER AUSRICHTUNG UND BETRIEBSVERFAHREN**

(30) Priorität: 04.06.2021 DE 102021114430
(71) Anmelder: Konsec GmbH, 70794 Filderstadt (DE)
(72) Erfinder: HEUGEL, Simon, 72766 Reutlingen (DE); KONOLD, Martin, 72074 Tübingen (DE)
(74) Vertreter: Spachmann, Holger

(57) **Zusammenfassung**

Die Erfindung betrifft eine RFID/NFC-Antennenvorrichtung (10) zum Auslesen und/oder Kommunikation eines RFID/NFC-Tags (12) in einer beliebigen dreidimensionalen Position oder Ausrichtung, umfassend eine Antenneneinrichtung (14) und eine Ansteuereinrichtung (16), wobei die Antenneneinrichtung (14) in einer X/Y-Achsenebene (18) flächig ausgebildet ist, insbesondere auf einer ebenen Platte (20) in einer X/Y-Achsenebene (18) angeordnet ist. Die Antenneneinrichtung (14) umfasst zumindest eine, insbesondere zwei ineinander verschachtelt und / oder übereinander gestapelte, Antenneneinheiten (22), wobei die zumindest eine Antenneneinheit (22) zwei orthogonal zueinander ausgerichteten Direktivitätsachsen in X- und Z-Achsrichtung und / oder in Y- und Z-Achseinrichtung aufweist.

Es wird vorgeschlagen, dass zumindest eine Antenneneinheit (22) zumindest zwei, sich gegenseitig überdeckende Antennenschleifen (24) umfasst, wobei jede Antennenschleife (24) zumindest drei benachbarte und elektromagnetisch aktive Bereiche (25) der orthogonal zueinander ausgerichteten Direktivitätsachsen aufweist, wobei die Bereiche (25) jeder Antennenschleife durch einzelne Leiterabschnitte (30) der Antennenschleife (24) voneinander abgegrenzt sind, und sich zugeordnete Bereiche (25) der beiden Antennenschleifen (24) im Wesentlichen überdecken.

In einem nebengeordneten Aspekt betrifft die Erfindung ein Verfahren zum Betrieb einer derartigen RFID/NFC-Antennenvorrichtung (10), in dem ein sequentielles oder kombinatorisch selektives Umschalten der Antenneneinheiten (22) erfolgt, bis eine optimierte induktive Kopplung mit dem NFC/RFID-Tag (12) in beliebiger Lage über der X/Y-Achsenebene (18) erreicht ist.

## Beschreibung

Die Erfindung betrifft eine RFID/NFC-Antennenvorrichtung zum Auslesen und/oder Kommunikation eines RFID/NFC-Tags in einer beliebigen dreidimensionalen Position oder Ausrichtung, die eine Antenneneinrichtung und eine Ansteuereinrichtung umfasst. Hierzu ist die Antenneneinrichtung in einer X/Y-Achsenebene flächig ausgebildet, insbesondere auf einer ebenen Platte in einer X/Y-Achsenebene angeordnet.

Das Betriebsverfahren ermöglicht eine Datenkommunikation eines RFID-Tags in einer beliebigen räumlichen Lage und/oder Ausrichtung in einem begrenzten dreidimensionalen Raum über der Ebene der Antenneneinrichtung.

### STAND DER TECHNIK

RFID (Radio-frequency identification) bezeichnet eine Technologie für Sender-Empfänger-Systeme zum automatischen und berührungslosen Identifizieren und Lokalisieren von Objekten für eine Datenkommunikation mittels elektromagnetischer Felder. Ein RFID-System besteht aus einem Transponder oder RFID-Tag, der einen kennzeichnenden Code bzw. Dateninformationen enthält und ein Lesegerät mit einer Antenneneinrichtung zum Auslesen dieser Kennung. RFID-Tags können sehr klein, insbesondere nicht größer als eine 1-Cent-Münze, ausgeführt sein, und bieten eine Vielzahl von Anwendungsmöglichkeiten. So kann eine Anwendung darin bestehen, diese in endbenutzerfreundlichen Mediengeräten zum Abspielen von Inhalten einzusetzen, wobei die RFID-Tags in dreidimensionalen Spielfiguren untergebracht sein können, die symbolisch für den Inhalt des Medieninhalts steht. Ein solches System stellt beispielsweise die sogenannte Toniebox der Boxine GmbH aus Düsseldorf dar. Die als Tonies bezeichneten dreidimensionalen Figuren der Größe von 3-10 cm symbolisieren eine Geschichte beispielsweise ein Sandmännchen, ein kleinen Prinzen, ein Grüffelo, wobei an der Unterseite, magnetisch haftbar, ein RFID-Tag angebracht ist. In einer Internetcloud sind dazugehörige abspielbaren Inhalte in Form von Hörspielgeschichten gespeichert, wobei durch Auslesen des Tagidentifikationscodes einer Figur mittels der Toniebox Inhalte aus der Cloud heruntergeladen und abgespielt werden können. Somit ist ohne komplizierte Bedienerführung ein leichtes Abspielen und Bedienen einer solchen Toniebox durch ein Kleinkind möglich. Um derartige Inhalte des Cloud-Speichers mit der jeweiligen Figur abgleichen zu können existiert eine Datenbank, wobei zunächst der auf dem RFID-Tag gespeicherte Identifikationscode der jeweiligen Tonie-Figur einem zugehörigen Medieninhalt zugeordnet wird.

Eine andere Anwendung für RFID-Tags ist zum Beispiel die automatische und berührungslose Identifikation von Einzelhandelswaren durch ein Kassensystem zur Preisabrechnung und für die Warenlogistik, wobei die Waren sehr kurz in die Nähe der Antenneneinrichtung gebracht werden.

Auch in der Warenlogistik, Produktion und Bezahlsystemen, sowie beispielsweise in Personeneintritts-Kontrollsystemen werden derartige RFID-Technologien angewendet, wobei es noch eine Vielzahl weiterer Einsatzmöglichkeiten einer drahtlosen Datenkommunikation gibt.

Eine NFC-Kommunikation (Near Field Communication) ist ein auf der RFID-Technik basierender, internationaler Übertragungsstandard zum kontaktlosen Austausch von Daten durch elektromagnetische Induktion mittels loser gekoppelter Spulen über kurze Strecken von wenigen Zentimetern und einer relativ geringen Datenübertragungsrate von bis zu 500 kBit/s. Auch in diesem Anwendungsgebiet, beispielsweise bei automatischen Bezahlsystemen, wird ein NCF-Tag in der Nähe einer Auslesespule, die Teil einer Antenneneinrichtung ist, gebracht. Hierzu ist eine exakte Ausrichtung notwendig.

Für viele Anwendungen ist es vorteilhaft, wenn die Datenkommunikation zwischen RFID-Tag und Antenneneinrichtung unabhängig von der räumlichen Orientierung des NFC/RFID-Tags in einem vordefinierten Volumen um die Sende-/Leseantenneneinrichtung erfolgt. Hierdurch ist eine schnelle, sichere und bequeme Datenkommunikation möglich. Für die Kommunikation der Antenneneinrichtung mit dem RFID-Tag muss eine für die Kommunikationsanforderung ausreichende Kopplung zwischen Sender und Empfänger vorliegen. Hierfür sind neben den Antenneneigenschaften und den Feldstärken die räumliche Orientierung von Sender und Empfänger beispielsweise bezüglich Ort und Winkel entscheidend um eine ausreichende Kopplung, die sowohl eine Energieübertragung der Antenneneinrichtung auf den RFID-Tag als auch einen Datenempfang von RFID-Tag zur Antenneneinrichtung ermöglicht, etabliert werden kann. Ausgehend vom RF-Magnetfeld, welches durch die NFC/RFID-Antennenvorrichtung am Ort des RFID/NFC-Tags erfolgt wird, ist sowohl dessen Stärke als auch räumliche Orientierung relativ zu dem RFID/NFC-Tag entscheidend.

Aus Geometrie und Kostengründen haben NFC/RFID-Tags unabhängig von der Bauform häufig eine Vorzugsrichtung, die den Spuleneigenschaften der in den Elementen eingebrachten Antennen entspricht. Die nötige magnetische Feldstärke für eine erfolgreiche Kommunikation mit dem Tag hängt direkt von diesen Eigenschaften ab. Da die Kopplung zwischen den beiden Elementen lediglich im Nahfeld der Antenne erfolgt, kann eine einzelne Antenne lediglich ein Magnetfeld in einer ortsabhängig fixierten Stärke (Amplitude) und Richtung erzeugen. Um eine Abdeckung über alle drei Raumrichtungen an einem gegebenen Ort zu erreichen, sind also mindestens drei unabhängige Antennen nötig, wobei sich die Anforderungen an eine erfolgreiche Kommunikation aus den gegebenen Richtungen und Stärken der drei Feldamplituden an diesem Ort ergibt.

Die WO 2007/053567 A1 zeigt einen aus mehreren Elementen zusammenschaltbaren RFID-Koppler. Aufgabe der Antennenvorrichtung soll sein, eine oder mehrere selektiv abstrahlende Einzelelemente so zusammenzuschalten, um ein Nahfeld derart zu tunen, um mit einem Transponder in einer beliebigen Orientierung zu kommunizieren. Hierzu ist eine planare Antennenstruktur vorgesehen, die mehrere Leitungszweige aufweist, die mittels einer Umschaltmatrix und einer Impedanzanpassung selektiv angesteuert werden können. Somit können unterschiedliche Abstrahlcharakteristiken zur Lagendetektion eines RFID-Transponders eingestellt werden. Eine Umschaltung der verschiedenen Charakteristiken erfolgt sequentiell.

Auch die WO 2017/079094 A1 beschreibt ein planares Array aus sich kreuzenden Leiterstreifen kombiniert mit einem berührungssensitiven Display zur Ausbildung von X- und Y-ausgerichteten Antennen für eine RFID/NFC-Kommunikation. Es ist keine Z-Orientierung der Nahfeldpolarisierung erläutert und es wird lediglich eine Identifikation der Orientierung eines NFC-Stiftes eines Tablets bewirkt.

In der WO 2010/082823 A2 ist ein Spielbrett offenbart, das eine Matrixanordnung von Antennenelementen in einer X/Y-Ebene zur Kommunikation mit einem RFID-Tag umfasst. Diese können dynamisch miteinander zur selektiven Ausrichtung verschaltet werden, wobei ein kapazitives Anpassungsnetzwerk genutzt und mittels einer Umschaltmatrix ein sequentielles Umschalten ermöglicht wird.

Ebenso verweist die WO 2010/132417 A1 auf ein planares Antennennetzwerk, das in der Lage ist, eine beliebige Orientierung eines RFID-Tags zu erfassen, wobei Schaltelemente die Gesamtimpedanz und Orientierung des Nahfeldes des Antennennetzwerkes verändern kann. Eine einstellbare X/Y/Z-Orientierung ist nicht explizit dargestellt.

Aus der WO 2007/030004 A1 geht ein Anti-Diebstahlsystem hervor, wie es z.B. an Eingängen von Einkaufshäusern eingesetzt wird. Das System erfasst Lage und Orientierung eines RFID-Tags, z.B. eines Preisschildes und kann die Orientierung des Magnetfeldes verändern, so dass verschiedene Position und Orientierungen von RFID-Tags detektierbar werden. Hierzu ist eine matrixartige Anordnung einzelner Antennenelemente vorgesehen, die durch ein Schaltelement angesteuert werden können.

Die EP 1 511 119 A 1 betrifft eine Antennenvorrichtung für beliebige Anwendungen mit mehreren, planar angeordneten Antennenelementen, deren Direktivität durch eine Schaltmatrix steuerbar ist. So kann beispielsweise eine Multidirektivitätsantenne, die aus einundzwanzig Antennenelementen gebildet ist, deren Direktivität mittels Schaltelemente umschaltbar ist. Die Antennenelemente bestehen aus rechteckigen Metallflächen, die als Dipolanordnung, Reflektor oder Wellenleiter verschaltet werden können.

Aus der WO 2011/072844 A1 geht ein planares Antennensystem für eine RFID-Anwendung hervor, durch das Polarisierung und Direktivität des abzustrahlenden elektromagnetischen Feldes gezielt veränderbar ist. Hiermit soll zur Suche und Kommunikation eines RFID-Tags das elektromagnetische Feld ortsveränderlich, unterschiedlich polarisierbar und fokussierbar sein. Hierzu sind eine Umschaltmatrix und ein Anpassungsnetzwerk vorgesehen. Es kann eine einstellbare Antennenkeule ausgebildet werden, wobei die Antennenebene verschaltbare rechteckförmige Metallpatches umfasst.

Des Weiteren betrifft die EP 2 284 951 B1 eine Antennenumschaltmatrix für RFID-Antennensysteme, die den Einsatz mehrerer Antennen zur Kommunikation mit beliebig orientierten RFID-Tags überflüssig machen soll. Ein Vierfeld-Patchantennensystem kann über eine Steuereinrichtung derart angesteuert werden, dass verschiedene Polarisierungen und Direktivitäten ermöglicht werden. Hierdurch kann eine horizontale, vertikale und zirkulare Polarisierungen ermöglicht werden, wobei durch Phasenverschiebungen verschiedene Direktivitäten ermöglicht werden.

Schließlich betrifft die JP 2005-223 402 A eine Antenneneinrichtung mit zwei übereinander angeordneten Antennenschleifen, die jeweils In-Plane Direktivitätsachsen und dazu rechtwinklige Direktivitätsachsen zur Kommunikation mit einem beliebig orientierten RFID-Tag. Dabei weist eine Antennenschleife zwei Bereiche und eine weitere, übereinander angeordnete Antennenschleife drei elektromagnetisch aktive Schleifenbereiche auf, um In-Plane (X/Y) und Out-of-Plane (Z) Direktivitätsachsen zu erzeugen. Diese Bereiche sind unterschiedlich groß, wobei In-Plane Komponenten deutlich schwächer ausgeprägt werden können als in Z-Richtung ausgerichtete Out-of-Plane Komponenten. Der Erfassungsbereich ist somit anisotrop wobei eine höhere Z-Achsen-Sensitivität als X- oder Y-Achsensensitivität erreichbar ist. Zudem treten inhomogene Feldabdeckungen auf, so dass eine zuverlässige Detektion von Tags insbesondere in einer für eine in X- oder Y-Direktivitätsachse lageorientierten Tag deutlich verschlechtert ist.

Nachteilig am Stand der Technik ist, dass alle vorbekannten Antenneneinrichtungen mit entweder mehr als einer Antenne mit vordefinierten Polarisationen oder einem relativ komplexen Aufbau und Steuerung mit mehreren Antennenelementen ausgeführt sind. In der Regel können maximal zwei Orientierungen, das heißt X/Z oder Y/Z erfasst werden. Die sichere Detektion sowohl von Lage als auch von Ausrichtung eines RFID-Tags in einen vordefinierten dreidimensionalen Raum mit isotroper Sensitivität und homogenem Erfassungsbereich über einer zweidimensionalen Ebene ist mit praktisch allen den vorgenannten Antennenstrukturen nicht möglich.

Aufgabe der vorliegenden Erfindung ist es daher, eine RFID/NFC-Antennenvorrichtung vorzuschlagen, die ein Auslesen und/oder eine Kommunikation eines RFID/NFC-Tags in einer beliebigen dreidimensionalen Position oder Ausrichtung über einer X/Y-Achsenebene, auf der sich eine Antenneneinrichtung der Antennenvorrichtung befindet, zu ermöglichen, die einen einfachen Aufbau, eine kostengünstige Produktion und ein einfacheres und schnelleres Verfahren zur Auswertung ermöglicht.

Diese Aufgabe wird durch eine Antennenvorrichtung und einem Verfahren zum Betrieb dieser Antennenvorrichtung nach den unabhängigen Ansprüchen gelöst. Vorteilhafte Ausbildungen der Erfindung sind Gegenstand der Unteransprüche.

### OFFENBARUNG DER ERFINDUNG

Erfindungsgemäß wird eine RFID/NFC-Antennenvorrichtung zum Auslesen und/oder Kommunikation eines RFID/NFC-Tags in einer beliebigen dreidimensionalen Position oder Ausrichtung weiterentwickelt, umfassend einer Antenneneinrichtung und einer Ansteuereinrichtung, wobei die Antenneneinrichtung in einer X/Y-Achsenebene flächig ausgebildet ist, insbesondere auf einer ebenen Platte in einer X/Y-Ebene angeordnet ist. Die Antenneneinrichtung umfasst zumindest eine Antenneneinheit, insbesondere zwei ineinander verschachtelt und/oder übereinander gestapelte Antenneneinheiten, wobei die zumindest eine Antenneneinheit zwei orthogonal zueinander ausgerichtete Direktivitätsachsen in X- und Z-Richtung und/oder in Y- und Z-Richtung aufweist.

Es wird vorgeschlagen, dass zumindest die zumindest eine Antenneneinheit zumindest zwei, sich gegenseitig überdeckende Antennenschleifen umfasst, wobei jede Antennenschleife zumindest drei benachbarte und elektromagnetisch aktive Bereiche der orthogonal zueinander ausgerichteten Direktivitätsachsen aufweist. Die Bereiche sind durch einzelne Leiterabschnitte der Antennenschleife klar voneinander abgegrenzt. Zugeordnete Bereiche der beiden Antennenschleifen überdecken sich im Wesentlichen. Die Überdeckung kann vorzugsweise vollflächig sein, so dass sich zugeordnete Bereiche der zumindest zwei Antennenschleifen im Wesentlichen flächig, bevorzugt passgenau überdecken.

Mit anderen Worten wird eine RFID/NFC-Antennenvorrichtung vorgeschlagen, die eine Antenneneinrichtung umfasst. Die Antenneneinrichtung ist flächig ausgebildet insbesondere auf einer ebenen Platte, kann aber auch auf einer gewölbten oder auf einer abgewinkelten Ebene ausgebildet sein. Die Antenneneinrichtung weist zumindest eine Antenneneinheit auf, bevorzugt zwei Antenneneinheiten auf, die entweder übereinander gestapelt oder ineinander derart verschachtelt sind, wobei eine Antenneneinheit zwei orthogonal ausgerichtete Direktivitätsachsen aufweist, die ausgehend von der Ebene der flächigen Ausbildung, die als X/Y-Ebene betrachtet wird, eine orthogonale in Z-Achsenrichtung und eine in parallele X-Achsenrichtung oder eine in parallele Y-Achsenrichtung zur Ebene ausgerichtete Direktivitätsachse aufweist. Die Direktivität wird als die Sensitivitätsachse angesehen, in der eine verbesserte elektromagnetische Kopplung mit einem RFID-Tag möglich ist.

Mit Hilfe der Antenneneinheit kann sowohl in Z- als auch in X-Richtung beziehungsweise in Y-Richtung mit zumindest einer, bevorzugt zwei Antenneneinheiten, wobei eine in X- und in Z-Richtung, die andere in Y- und in Z-Richtung eine Direktivitätsachse aufweist, alle drei Raumrichtungen eines dreidimensionalen Raums oberhalb der flächigen Ausrichtung der Antenneneinrichtung erfasst werden. Somit kann ein RFID-Tag sowohl in Lage als auch in Ausrichtung in einem dreidimensionalen Raum oberhalb der Antenneneinrichtung sicher erfasst werden. Dadurch ist die Antennenvorrichtung eingerichtet, dass eine Kommunikation mit einem beliebigen raumorientierten NFC/RFID-Tags mindesten in einem vordefinierten Volumen stattfinden kann.

Die zumindest eine Antenneneinheit umfasst zumindest zwei getrennt aktivierbare Antennenschleifen beispielsweise für eine X/Z- oder eine Y/Z-Direktivität, und jede Antennenschleife weist zumindest drei durch Leiterabschnitte abgegrenzte benachbarte und elektromagnetisch aktive Bereiche zur Erzeugung der orthogonalen Direktivitätsachsen X und Z auf, gleiches gilt für eine Y/Z-Direktivität. Durch Leiterabschnitte separierte benachbarte Bereiche jeder Antennenschleife weisen nicht zwangsläufig verschiedene Direktivitätsachsen auf, es genügt, wenn zumindest ein Bereich eine orthogonal verschiedene Direktivitätsachsen als andere Bereiche aufweisen. Insoweit weist jede Antennenschleife zumindest drei Schleifenbereiche auf, die zumindest eine bzw. zwei Orientierungen in X- Richtung und zumindest zwei bzw. eine Orientierung in Z-Richtung ermöglicht, und eine zweite Antennenschleife, die ebenfalls eine bzw. zwei Orientierungen in X-Richtung und zwei bzw. eine Orientierung Z-Richtung ermöglicht, wobei die Bereiche für die X-Direktivitäten der beiden Antennenschleifen nebeneinander liegen, und die Bereiche für die Z-Direktivitäten nebeneinander liegen. Die Antennenschleifen überdecken sich im Wesentlichen derart, dass zugeordnete Bereiche beider Antennenschleifen für eine X/Z-Direktivität bzw. für eine Y/Z-Direktivität sich flächig überdecken. Die zugeordneten Bereiche der beiden Antennenschleifen können bevorzugt formgerecht übereinander passen oder können sich flächig kongruent überdecken und können vergleichbare Abmessungen aufweisen, im speziellen deckungsgleich sein. Weiterhin sind die in diesen Bereichen einstellbaren Direktivitätsachsen der zugeordneten Bereiche orthogonal zueinander, d.h. eine erste Antennenschleife weist beispielsweise einen Bereich mit einer In-Plane Direktivitätsachse in X- oder Y-Richtung auf, und der zugeordnete und überdeckende Bereich einer zweiten Antennenschleife weist eine Direktivitätsachse in Z-Richtung, rechtwinklig zur Lageebene der Antenneneinheit auf. Dadurch, dass beide Antennenschleifen eine gleiche Anzahl an elektromagnetisch aktiven Bereichen aufweist, lässt sich durch ein Durchschalten der beiden Antennenschleifen die gesamte Ebene, die durch die Bereiche abgedeckt wird, sowohl in X-Richtung bzw. Y-Richtung als auch in Z-Richtung in gleicher Feldstärke lückenlos erfassen, wobei einzelne Bereiche eine Direktivitätsachse in X- bzw. Y-Richtung und benachbarte Bereiche eine Direktivitätsachse in Z-Richtung aufweisen. Benachbarte Bereiche müssen nicht zwangsläufig orthogonale Direktivitätsachsen aufweisen, es genügt, dass die Superposition beider Antennenschleifen sowohl eine vollständige Abdeckung in X bzw. Y und Z Richtung ermöglicht. Insofern ist eine identische Anzahl elektromagnetischer Bereiche für eine homogene elektromagnetische Erfassung des Raumbereichs vorteilhaft. Die X/Z-Direktivitätsachsen der zumindest zwei Antennenschleifen überdecken sich idealerweise komplementär. Somit lassen sich selektiv in jedem Aktivierungszustand der Antennenschleifen Bereiche ausbilden, die sowohl in einer X- als auch in einer Z-Direktivitätsachse sensitiv sind. Kombiniert man hierzu eine zweite Antenneneinheit, die dasselbe in Y- und Z-Richtung ermöglicht, kann durch das Durchschalten sowohl in X-, Y- und Z-Direktivitätsrichtungen alle Teilbereichen des dreidimensionalen Raums nach einem RFID-Tag in allen Direktivitätsachsen mit homogener Feldstärke und lückenlos durchsucht werden, wobei durch ein selektives Durchschalten der zumindest zwei Antennenschleifen jeder Antenneneinheit die einzelnen Direktivitätsachsen in jedem Raumbereich zumindest einmal in X-, in Y- und in Z-Richtung einstellbar ist.

Die Erfindung ermöglicht eine ideale Konfiguration und Anordnung einer Antenneneinrichtung auf einer Fläche, sodass in einem direkt an die Fläche angeschlossenen Raumbereich diese Anforderung erfüllbar ist. Die geometrische Gestaltung der Antenneneinrichtung liegt einem Konstruktionsprinzip zu Grunde welches sich im Rahmen der verfügbaren elektronischen Komponenten und Module auf beliebigen Flächenformen und Größen ausdehnen lässt. Eine weiter unten näher spezifizierte Antennenumschaltmatrix ermöglicht eine selektive Auswahl der Antenneneinheiten, wobei sich zumindest eine Direktivitätsachse finden lässt, in der eine optimierte Kommunikation mit einem NFC/RFID-Tag ermöglicht wird.

In einer vorteilhaften Ausführungsform kann die Antenneneinrichtung eine erste und eine zweite Antenneneinheit umfassen, wobei die erste Antenneneinheit Direktivitätsachsen in X- und Z-Achsenrichtung und die zweite Antenneneinheit Direktivitätsachsen in Y- und Z-Achsenrichtung aufweist, wobei bevorzugt die erste und zweite Antenneneinheit auf einem ein- oder zweiseitig beschichteten PCP angeordnet sind. Durch die Kombination von zwei Antenneneinheiten mit X/Z-Direktivität und Y/Z-Direktivität können alle drei Raumrichtungen vollständig oberhalb der planaren Ebene der Antenneneinrichtung erfasst werden.

In einer vorteilhaften Weiterbildung der vorgenannten Ausführungsform können die Antennenschleifen derart ineinander verschachtelt oder übereinander angeordnet sein, dass sich deren elektromagnetisch aktiven Bereiche mit orthogonal zueinander ausgerichteten Direktivitätsachsen zumindest teilweise überlappen. Hierdurch wird eine verbesserte Durchdringung des gesamten Raumbereichs mit den orthogonalen Direktivitätsachsen ermöglicht.

Bezugnehmend auf die beiden vorhergehenden Ausführungsformen kann vorteilhaft jede Antennenschleife zumindest einen spiralförmigen Schleifenabschnitt umfassen. Mittels eines spiralförmigen Schleifenabschnitts kann insbesondere eine flächig ausgelegte Antenneneinrichtung kompakt mit einer hohen Feldstärkedichte auf einer planaren Ebene angeordnet sein, und ein gleichförmiges elektromagnetisches Feld insbesondere magnetisches Feld ermöglichen, insbesondere eine gute magnetische Nahfeldkopplung zur Leistungsübertragung an den RFID/NFC-Tags eingestellt werden.

Nach einer in Bezug auf die vorgehende Ausführungsform weiteren vorteilhaften Weiterentwicklung kann eine erste Antennenschleife spiralförmig und eine zweite Antennenschleife doppelspiralförmig mit gespiegeltem Windungsgang, die nebeneinander angeordnet sein, ausgeformt sind. Somit ist die erste Antennenschleife spiralförmig ausgebildet und bildet bei Bestromung in den außenliegenden Bereiche eine X- bzw. Y- und in zentralen Bereichen der Spirale eine Z-förmige Direktivitätsachse aus. Hierzu komplementär kann die zweite Antennenschleife doppelspiralförmig ausgelegt sein, und bildet damit an den Randbereichen eine Z-Direktivitätsachse und im Mittelbereich eine X- beziehungsweise Y-Direktivitätsachse aus. Somit können durch Durchschalten der zumindest zwei Antennenschleifen die Direktivitätsachsen orthogonal und auch tangential zur Ebene der Antenneneinrichtung ausgebildet werden, wobei der gesamte Raumbereich dadurch zuverlässig erfasst werden kann.

In einer weiteren vorteilhaften Ausführungsform der Erfindung kann die Antenneneinrichtung eine Antenneneinheit mit einer Mehrzahl von elektromagnetischen aktiven Leiterabschnitten umfassen, wobei die Leiterabschnitte mittels Schaltelemente in mindestens zwei, insbesondere drei verschiedenen Antennenschleifen verschaltbar sind, die zumindest zwei, insbesondere drei zueinander orthogonale Direktivitätsachsen aufweisen. In dieser Ausführungsform können mehrere elektromagnetisch aktive Leiterabschnitte beliebig mittels Schaltelementen derart miteinander verschaltet werden, dass gewünschte Stromflussrichtungen und somit Direktivitätsachsen einstellbar sind. So können beispielsweise elektromagnetische Leiterabschnitte lediglich in X-Richtung aktiviert werden, um eine Direktivitätsachse in Y-Richtung zu erzeugen, oder elektromagnetisch aktiven Leiterabschnitte in Y-Richtung durchströmt werden, um eine Direktivitätsachse in X-Richtung zu erreichen. Schaltet man Leiterabschnitte spiralförmig als flächige Spirale, so kann eine Direktivitätsachse in Z-Richtung ausgebildet werden. Somit kann beliebig anpassbar die Direktivitätsachse in allen Raumachsen durchgeschaltet werden, wobei ein hoher Aufwand bezüglich der Schalteinheiten und der Schaltlogik einzusetzen ist, und flexibel anpassbare Antennenselektivitäten für eine optimierte Datenkommunikation erreichbar sind.

In einer vorteilhaften Weiterbildung der Antennenvorrichtung kann die X/Y-Achsenebene der flächigen Ausbildung der Antenneneinrichtung gekrümmt oder abgewinkelt, insbesondere halbschalenförmig ausgebildet sein. Durch eine räumliche Anpassung der Achsenebene, auf der die Antenneneinrichtung angeordnet ist, kann eine Richtwirkung oder eine Definition des dreidimensionalen Raums, in der sich der NFC/RFID-Tag befindet, optimiert werden, um eine verbesserte Kommunikation zu ermöglichen.

In einer weiteren vorteilhaften Ausführungsform kann die Ansteuereinrichtung ein Impedanzanpassungsnetzwerk, das eine Impedanzanpassung zumindest einer Antenneneinheit, insbesondere zumindest einer Antennenschleife, ermöglicht, umfasst sein, wobei bevorzugt das Impedanzanpassungsnetzwerk für die zumindest eine Antenneneinheit, insbesondere für die zumindest eine Antennenschleife, bevorzugt adaptiv einstellbare Impedanzanpassungseinheiten umfasst. Jede Antennenstruktur weist eine elektrische Impedanz für das Versorgungsnetzwerk auf, wobei die betreibende Antennenansteuerung in der Regel eine identische Innenimpedanz aufweisen sollte, um eine optimierte Antennenabstrahlung der elektromagnetischen Energie zu ermöglichen. Dieses Impedanzmatching ist wesentlich für einen optimierten und energiesparenden Betrieb und eine hohe Reichweite der Antenneneinrichtung, was insbesondere bei Batterie oder akkugestützten Anwendungen vorteilhaft ist. Da die Antenneneinrichtung mehrere Antenneneinheiten mit mehreren Antennenschleifen umfasst, die unterschiedliche Impedanzen aufweisen, kann beim Umschalten auf die einzelnen Antennenschleifen beziehungsweise Antenneneinheiten die Impedanz nachgeführt beziehungsweise angepasst werden. Hierzu kann vorteilhaft ein adaptives Impedanzanpassungsnetzwerk dienen, wobei bevorzugt zwischen einzelnen, auf einzelne Antennenschleifen optimierte, RLC-Glieder umgeschaltet werden kann, um Impedanzen an eine aktive Antenneneinheit, insbesondere an die aktiv Antennenschleife anzupassen.

In einer vorteilhaften Ausführungsform kann die Ansteuereinrichtung einer Antennenumschaltmatrix mit einer Steuerungseinheit umfassen, die ausgelegt ist, zwischen Antenneneinheiten, insbesondere zwischen Antennenschleifen umzuschalten. Die Antennenumschaltmatrix kann von einer Steuerungseinheit gesteuert werden, und dient zum Umschalten der einzelnen Antenneneinheiten beziehungsweise Antennenschleifen und insbesondere zum Schalten des Impedanzanpassungsnetzwerks, sodass in verschiedenen Raumrichtungen verschiedene Direktivitätsachsen gescannt werden können. Die Logik, mit der die Steuerungseinheit die Antennenumschaltmatrix ansteuert, kann derart optimiert sein, dass eine möglichst schnelle Kopplung mit beliebig orientierten und positionierten RFID-Tags erreichbar ist.

In einer vorteilhaften Weiterbildung der Erfindung kann die Ansteuereinrichtung eine RFID/NFC-Kommunikationseinheit umfassen, die eine Datenkommunikation mit dem RFID/NFC-Tag über die Antenneneinrichtung bereitstellt. Die Kommunikationseinheit dient in üblicher Weise zum Auslesen bzw. Schreiben des Dateninhalts des Tags und zum Auswerten dieser Informationen um eine vordefinierte Aufgabe beispielsweise eine Preiserkennung oder die Verknüpfung mit einem Multimediainhalt zu ermöglichen, um die übergeordnete Aufgabe der RFID/NFC-Tageinsatzes zu ermöglichen.

Nach einer weiteren vorteilhaften Ausführungsform, die sich auf die beiden vorgenannten Weiterbildungen bezieht, kann die RFID/NFC-Kommunikationseinheit eine Steuersignalverbindung für ein Steuersignal zur Auswahl einer optimierten Antennenkonfiguration der Antenneneinrichtung an die Steuerungseinheit aufweisen, wobei bevorzugt das Steuersignal eine induktive Kopplungsqualität zwischen Antenneneinrichtung und RFID/NFC-Tag angibt. Insbesondere ist die RFID/NFC-Kommunikationseinheit über die Steuersignalverbindung mit der Steuerungseinheit derart verbunden, dass diese auf Basis eines Kopplungsqualitätssignals eine optimierte Einstellung und Auswahl einer Antenneneinheiten ermöglicht, insbesondere eine optimierte Antennenschleife auswählt, um einen RFID/NFC-Tag zu koppeln. Hierdurch lässt sich auf relativ einfache Art und Weise eine Qualitätsbeurteilung der Datenverbindung zwischen der Kommunikationseinheit und dem Tag und eine Steuerung der Antenneneinrichtung erreichen, um mit möglichst geringem Aufwand und in kurzer Zeit eine optimierte Auswahl der zu aktivierenden Antenneneinrichtung zu treffen.

In einer vorteilhaften Weiterbildung der Erfindung können mehrere flächig und/oder abgewinkelt benachbarte Antenneneinrichtungen und zumindest eine insbesondere mehrere Ansteuereinrichtungen umfasst sein. Insbesondere für großvolumige dreidimensionale Raumbereiche oder sperrige Güter, bei den beispielsweise durch ein RFID/NFC-Tag beim Einkaufen ein Preis identifiziert werden soll, kann es vorteilhaft sein, mehrere Antenneneinrichtungen, die flächig zueinander oder abgewinkelt zueinander benachbart sind, einzusetzen, um einen ausgedehnten dreidimensionalen Raumbereich scannen zu können. Insoweit kann die Antennenvorrichtung räumlich skalierbar sein und kann mehrere Antenneneinrichtungen umfassen, die nach dem gleichen Prinzip arbeiten und einen begrenzten dreidimensionalen Raumbereich scannen, die überlappend ausgebildet sein können, und somit einen deutliche vergrößerten und skalierbaren Erfassungsbereich ermöglichen.

In einem nebengeordneten Aspekt wird ein Verfahren zum Betrieb einer vorgenannten Antennenvorrichtung vorgeschlagen, wobei die Ansteuereinrichtung ein sequentielles oder kombinatorisch selektives Umschalten von Antenneneinheiten der Antenneneinrichtung, insbesondere von Antennenschleifen einer Antenneneinheit, durchführt, bis eine optimierte induktive Kopplung der RFID/NFC-Tag in beliebiger Lage und Position über der X/Y-Achsenebene erreicht werden kann. In diesem Aspekt wird vorgeschlagen, dass die Antennensteuereinrichtung ein Regelsystem bildet, das ein sequentielles, insbesondere ein gleichlaufendes Schaltmuster des Umschaltens der einzelnen Antenneneinheiten beziehungsweise Antennenschleifen oder ein kombinatorisch selektives Umschalten, das beispielsweise auf einem Erfahrungswissen oder einer künstlichen Intelligenz beruhen kann, derart vornimmt, so dass nach wenigen Umschaltvorgängen eine optimierte induktive Kopplung erreicht werden kann, und ein Auslesevorgang oder Schreibvorgang des Tags erfolgen kann. Hierdurch wird ein schneller und effizienter Betrieb, insbesondere bei einer hohen Frequenz von Auslesevorgängen, wie beispielsweise an Kassensystemen, Überwachungssystemen oder bei der Massenproduktion von Produkten mit Tags, ermöglicht.

In einer vorteilhaften Weiterbildung des Verfahrens kann eine parametrisierte, insbesondere rekursive Impedanzanpassung durch das Impedanzanpassungsnetzwerk durchgeführt werden. Hierdurch können durch Vorgaben einer Umschaltreihenfolge oder durch ein zunächst erfolgtes Grobscannen und anschließendes Feinscannen mittels zumindest einer, bevorzugt zumindest zweier Antenneneinrichtungen mit grober und feinerer Antennendirektivität ein schnelles Impedanzmatching und eine verbesserte induktive Kopplung in kürzerer Zeit erreichbar sein.

In einer weiteren vorteilhaften Ausführungsform des Verfahrens kann ein sequentielles oder kombinatorisch selektives Umschalten einer Reihenfolge der Antenneneinrichtungen bzw. Antennenschleifen erfolgen, die eine erhöhte Wahrscheinlichkeit bisheriger optimierter Kopplungen nutzt, oder die auf Basis einer optischen Lageerkennung bestimmt ist. So kann beispielsweise eine optische Kamera umfasst sein, die die ungefähre Lage des RFID-Tags in der dreidimensionalen Ebene erkennt, oder auch mittels Radar oder Laser eine ungefähre Ortserkennung und/oder Lageerkennung ermöglicht, sodass hierzu optimierte Antennendirektivitätseinstellungen vorgenommen werden können, um entsprechende Antenneneinheiten der Antenneneinrichtung zu aktivieren. Auch kann ein Erfahrungswissen adaptiert werden, das zum Beispiel erkennt, dass bei vorherigen Tagauslesungen bestimmte Raumbereiche bevorzugt werden, und für weitere Tagauslesungen Direktivitätsachsen, die diese Raumbereiche besonders gut erfassen können, als Startpunkt genommen werden, um einen kombinatorischen Suchalgorithmus zu starten, der durch wenige Umschaltvorgänge eine optimierte induktive Kopplung mit dem Tag ermöglicht. Hierdurch können auch weitere Merkmale wie z.B. Abstände oder die im TAG gespeicherten Informationen ausgelesen werden.

Beispielsweise kann eine Antennenvorrichtung vier Antennenschleifen und zwei Antenneneinheiten umfassen, wobei sich diese Variante insbesondere für quaderförmige Volumen gut eignet, in welcher sich eine orientierungsabhängige Kommunikation mit einem Tag möglichst einfach einstellen lässt. Die Antennenvorrichtung kann als wesentliche Komponenten eine Steuerungseinheit umfassen, die die Steuerung der Antenneneinrichtung übernimmt und einen Impedanzanpassungsnetzwerk, das insbesondere mittels passiven Bauteilen ein Impedanzmatching der Antenneneinrichtung ermöglicht, sowie eine Umschaltmatrix, die die Aktivierung und Deaktivierung der einzelnen Antenneneinheiten vornimmt. Die Antenneneinheiten sind vorzugsweise auf einem PCB (printed circuit board), beispielsweise einem zweilagigen PCB angeordnet, das flächig aber auch gekrümmt oder abgewinkelt verlaufen kann, um optimiert einen vordefinierbaren Raumbereich zu scannen. Die Steuerungseinheit kann eine Kommunikation mit dem RFID/NFC-Tags regeln. Die Nahfeldkopplung kann über eine Steuerungsleitung als Regelgröße optimiert werden, wobei die Aktivierung einzelner Antenneneinheiten beziehungsweise Antennenschleifen derart erfolgen kann, dass die Steuerungsleitung ein optimiertes Signal bereitstellt. Hierzu ist die Steuerungseinheit entweder zentral für die Ansteuerung der Antenneneinrichtung ausgelegt, die in der Lage ist, mehrere Antenneneinrichtungen zu steuern, oder sie dient zur Aktivierung oder Deaktivierung einzelner Antennenschleifen, wobei eine übergeordnete Steuerungseinheit mehrere Antenneneinrichtungen koordinieren kann.

Die Steuerungseinheit und die Ansteuereinrichtung, aber auch das Impedanzanpassungsnetzwerk kann als eine einzige Komponente hochintegriert bereitgestellt werden. Ziel der Ansteuerung durch ein Umschalten der einzelnen Antennenschleifen kann es vorteilhaft sein, alle möglichen Orientierungen von verschiedenen NFC/RFID-Tags zu untersuchen und im Falle einer erfolgreichen Kopplung eine optimierte Einstellung der betreffenden Antenneneinheit/Antennenschleife vorzunehmen. Eine zentrale Komponente stellt die Impedanzanpassung dar. Diese kann durch einfache, passive elektronische Bauelemente wie Widerstände, Kondensatoren und Induktivitäten ermöglicht werden, und kann auf einzelne Antennenschleife abgestimmt werden. Eine aktiv geregelte oder steuerbare Anpassung mittels eines Impedanzanpassungsnetzwerkes und adaptiv anpassbaren Impedanzanpassungseinheit kann ermöglichen, dass im Betrieb einzelne, derzeit nicht aktive Antenneneinheiten bzw. Antennenschleifen gezielt verstimmt werden, um eine zusätzliche Verbesserung der Impedanzanpassung der aktiven Antenneneinheit/Antennenschleife zu erreichen. Beispielsweise ist es möglich, inaktive Antennenschleifen oder Antenneneinheiten durch das Impedanzanpassungsnetzwerk derart zu verstimmen, dass eine abgestrahlte elektromagnetische Energie von diesem nicht wieder aufgenommen oder parasitär abgeschirmt werden kann. Somit kann eine gezielte Verstimmung (Detuning) der nicht genutzten Antenneneinheiten oder Antennenschleifen durch das Impedanzanpassungsnetzwerk eine verbesserte elektromagnetische Kopplung der RFID/NFC-Tags ermöglichen.

Eine Optimierung der Impedanzanpassung kann durch eine Parametrisierung, insbesondere durch ein rekursives Parametrisierungsverfahren erreicht werden. Dieses dient zur Auswahl selektiv angepasster Bauteile, um die Einstellung des Impedanzanpassungsnetzwerks, hinsichtlich einer optimierten Impedanzanpassung zu erreichen. Vorteilhaft kann dies durch eine rekursive sequentielle Bestimmung der Parameter für die Impedanzanpassung einzelner Antenneneinheiten oder Antennenschleifen erreicht werden, bei gleichzeitiger Beibehaltung bereits zuvor optimierter bzw. festgelegter Impedanzanpassungen der übrigen Antenneneinheiten beziehungsweise Antennenschleifen aus aktuellen und vorhergehenden Durchgängen. Ein mögliches Verfahren zur Impedanzanpassung kann wie folgt gestaltet sein.
1. Exklusives Aktivieren einer ersten Antennenschleife beziehungsweise Antenneneinheit;
2. Impedanzanpassung der Antennenschleife beziehungsweise Antenneneinheit 1 durchführen;
3. Impedanzanpassung der Antennenschleife beziehungsweise Antenneneinheit beibehalten;
4. Wechsel zur nächsten Antenneneinheit beziehungsweise nächsten Antennenschleife;
5. Impedanzanpassung der nächsten Antenneneinheit beziehungsweise nächsten Antennenschleife durchführen;
6. Impedanzanpassung der nächsten Antennenschleife beziehungsweise nächsten Antenneneinheit beibehalten;
7. Wiederholen der vorhergehenden Schritte mit den weiteren Antenneneinheiten beziehungsweise weiteren Antennenschleifen.

Nach einem solchen Durchgang ist nach aller Erfahrung lediglich die letzte der angepassten Antenneneinheiten beziehungsweise Antennenschleifen auf die Impedanz richtig angepasst, alle vorhergehenden Antenneneinheiten beziehungsweise Antennenschleifen werden durch Veränderung der nachfolgenden Parameter wieder verstimmt.

Um alle Antennen in einen optimiert angepassten Zustand zu überführen kann das obige Verfahren mit Aussparung der letzten eingestellten Antenneneinheit(en) beziehungsweise Antennenschleife(en) rekursiv wiederholt werden, sodass die Impedanzanpassung der letzten Antenneneinheit(en) beziehungsweise Antennenschleifen beibehalten werden, die in ihrer Impedanz optimiert eingerichtet sind. Nach einiger Zeit konvergiert dieses Verfahren zu einer optimierten Impedanzanpassung aller Antenneneinheiten bzw. Antennenschleifen, welche sich durch geringe Änderungen der Anpassungsparameter der Impedanzen in den folgenden Durchgängen auszeichnet. Ist eine an alle Antenneneinheit/Antennenschleife ausreichend hohe Anpassung der Impedanzen erreicht, so kann das Verfahren beendet werden.

Es besteht jederzeit die Möglichkeit, Variationen in der Anpassungsreihenfolge des Impedanzmatching der Antenneneinheiten/Antennenschleifen vorzunehmen und einzelne Antenneneinheiten beziehungsweise Antennenschleifen auszulassen, solange an allen Antennen in einem abschließenden Test eine optimierte Anpassung erreicht werden kann.

Die Schaltung beziehungsweise das selektive Aktivieren und Deaktivieren der Antenneneinheiten oder Antennenschleifen durch die Steuerungseinheit und die Antennenumschaltmatrix kann auf verschiedene Weisen realisiert werden. Die einzelnen RF-Pfade können beispielsweise durch elektromechanische Relais, Halbleiterrelais aktiviert beziehungsweise deaktiviert werden, wobei eine galvanische Trennung der Antenneneinheiten/Antennenschleifen in der Realisierung bevorzugt wird, um eine vollständige elektromagnetische Trennung von der Steuerungseinheit zu erreichen.

Die Antennengeometrie der einzelnen Antennenschleifen beziehungsweise Antenneneinheiten ist wesentlich für ein optimiertes Verhalten der Antennenvorrichtung. Durch das Konstruktionsprinzip wird es ermöglicht, verschiedenartige Geometrien für Antennenpaare zu erzeugen, sodass diese Paare zumindest eine vollständige Abdeckung beziehungsweise Kommunikation mit dem NFC/RFID-Tag innerhalb zweier orthogonaler Raumrichtungen ermöglicht. Dieses Prinzip erlaubt es, mittels mindestens drei Antennenschleifen eine vollständige Abdeckung bezüglich der Kommunikation mit einem RFID/NFC-Tag zu erreichen, welche unabhängig von dessen Orientierung im Raum ist.

Das Prinzip zur Ausbildung der Antennengeometrie an zwei unterschiedlichen Antennentypen besteht darin, dass zwei Geometrien als selektiv komplementär zu betrachten sind, die in unterschiedlichen Raumbereichen einer Lesbarkeit des Tags für bestimmte Orientierungen dieses Tags gewährleisten. Bei zwei Typen von Antennenschleifen, die zu einer Antenneneinheit zusammengefasst werden, und die eine Orientierung sowohl in zwei orthogonale Raumrichtungen ermöglicht, wird nur die Abdeckung in diese beiden orthogonalen Raumrichtungen optimiert. Am einfachsten lässt sich dies durch eine Antennenschleife ermöglichen, die grundsätzlich spiralförmig aufgebaut ist, und die mit einer zweiten Antennenschleife kombiniert wird, die in Form einer Doppelspirale aufgebaut ist. Der zentrale Bereich der jeweiligen Spirale ermöglicht eine Ausrichtung in eine Z-Richtung bezüglich der X/Y-Antennenebene und die übrigen randseitigen Bereiche ermöglichen eine Ausrichtung in X- beziehungsweise Y-Richtung tangential zu dieser Antennenebene. Durch Kombination von zumindest zwei Antennenschleifen lässt sich der gesamte Raumbereich sowohl in X-Richtung als auch in Z-Richtung beziehungsweise Y-Richtung und Z-Richtung scannen. Kombiniert man dies mit einer um 90° gedrehten weiteren Antenneneinheit umfassend zumindest zwei weitere Antennenschleifen lassen sich sowohl in X-, Y-als auch in Z-Richtung alle Direktivitätsachsen erzeugen. Durch Überlagerung der Antennenschleifen und zwei um 90° gedrehte Antenneneinheiten kann somit eine Abdeckung bezüglich einer orientierungsunabhängigen Orientierung eines RFID/NFC-Tags in einem definierten Raumbereich ermöglicht werden. Auch kann von diesen Antennenarten abgewichen werden. Ausschließlich das zugrunde liegende Prinzip der wiederholt parallel/antiparallel geführten Leiterbahn ist zu beachten, sodass durch ein selektives Zusammenschalten von elektromagnetisch aktiven Leiterbahnen die vorgenannte Einstellung verschiedener Direktivitätsachsen erreichen werden kann.

Geradlinige und in den Ecken mit rechten Winkeln geführte Leiterbahnen haben sich in der Praxis als sehr gute Lösung insbesondere für quaderförmige Volumen herausgestellt. Eine maximale Anzahl der Windungen ist in der Regel durch die Eigenschaft der RF-Ansteuereinrichtung begrenzt. Durch eine Wiederholung der Anordnungsreihenfolge der Leiterbahnen und der Mehrfachwindungen kann eine Vergrößerung und Skalierbarkeit der Antenneneinrichtungen erreicht werden. Zusammen mit den Eigenschaften der NFC/RFID-Ansteuereinrichtung kann mittels Windungsanzahl und -größe die Antenne für eine gegebene Fläche angepasst und die nutzbare Höhe über der Antennenfläche für beliebige Kommunikationsabdeckung optimiert werden.

Des Weiteren besteht die Möglichkeit der Skalierung durch den Einsatz benachbarter Antenneneinrichtungen, die gegebenenfalls mit mehreren Antennenvorrichtungen, die über eine übergeordnete Steuerungsvorrichtung koordiniert werden können, zusammenschaltbar sind. Die Abstände der Antennenleitungen innerhalb der Antennenflächen sind relevant für das zu erzielende Ergebnis. Um den Raumbereich, in welchem die Selektion der NFC/RFID-Tags möglich sein soll, zu maximieren, können für eine bestimmte Antennengrundfläche optimale Abstände und Längen dieser Antennenleitungen mittels Optimierungsverfahren gefunden werden.

In der Praxis haben sich insbesondere äquidistante Anordnungen der Antennenleitungen als vorteilhaft erwiesen. Auch das Vorhandensein von Kreuzungsstellen in der Antennengeometrie ermöglicht eine einfache Lösung mit einer zweilagigen Ausführung der von Antennenleiterbahn auf einem PCB, wobei zum Beispiel eine erste Antennenschleife auf der Oberseite und eine zweite Antennenschleife einer Antenneneinheit auf einer Unterseite des PCB realisiert werden kann. Alternativ können einfache Brücken an Kreuzungspunkten über den Leiterbahnen eingesetzt werden, sodass auf einer einlagigen Platine zwei Antennenschleifen oder gegebenenfalls vier Antennenschleifen angeordnet werden können. Für eine korrekte Aneinanderreihung der Leiterbahnen existieren mehrere Möglichkeiten, wobei die Einstellung der korrekten Stromrichtung in den einzelnen Leiterpfaden von essentieller Bedeutung ist. Die Anzahl der Lösung kann kombinatorisch trivial ermittelt werden und lautet (N!)² wobei N die Anzahl der Windungen darstellt.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: Perspektivische Orientierung und Lage eines RFID-Tags über eine Antennenvorrichtung;
- **Fig. 2**: Ein schematisches Blockdiagramm eines Ausführungsbeispiels einer erfindungsgemäßen Antennenvorrichtung;
- **Fig. 3a, 3b**: Ein perspektivisch dargestelltes Ausführungsbeispiel einer Antenneneinheit umfassend zwei Antennenschleifen;
- **Fig. 3c**: Eine perspektivische Kombination der Figur 3a, 3b gezeigten Antennenschleifen;
- **Fig. 4**: Eine perspektivische Darstellung einer Antenneneinrichtung umfassend zwei nach Figur 3c dargestellten Antenneneinheiten;
- **Fig. 5a, 5b, 5c**: Ein planar dargestelltes weiteres Ausführungsbeispiel einer Antenneneinheit gemäß eines Ausführungsbeispiels der Erfindung ;
- **Fig. 6a, 6b, 6c**: Ein planar dargestelltes weiteres Ausführungsbeispiel einer Antenneneinheit ;
- **Fig. 7a, 7b, 7c**: Ein planar dargestelltes weiteres Ausführungsbeispiel einer Antenneneinheit;
- **Fig. 8a, 8b, 8c**: Ein planar dargestelltes weiteres Ausführungsbeispiel einer Antenneneinheit;
- **Fig. 9**: Ein Ausführungsbeispiel einer Antennenvorrichtung;
- **Fig. 10**: Ein planar dargestelltes weiteres Ausführungsbeispiel einer Antenneneinheit.

In den Figuren sind gleichartige Elemente mit gleichen Bezugszeichen beziffert. Die Figuren zeigen lediglich Beispiele und sind nicht beschränkend zu verstehen.

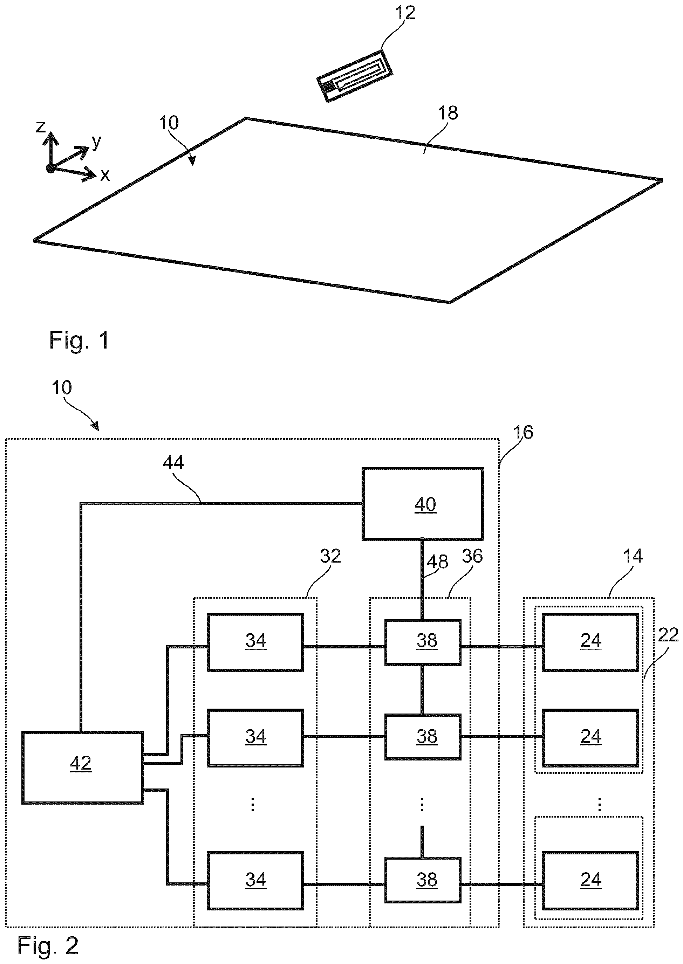

In der Fig. 1 sind in einer perspektivischen Darstellung ein RFID/NFC-Tag 12 dargestellt, der sich über einer X/Y-Achsenebene 18 befindet, auf der eine Antennenvorrichtung 10 mit einer Antenneneinrichtung 14 flächig angeordnet ist. Die Achsenebene 18 ist in X/Y-Richtung orientiert, und der RFID/NFC-Tag 12 ist in einem dreidimensionalen quaderförmigen Raum oberhalb dieser Antenneneinrichtung 14 in beliebiger Position, das heißt an einer beliebigen X/Y/Z-Koordinate und in seiner Empfangsdirektivität in beliebiger Ausrichtung, das heißt in der Orientierung seiner elektromagnetisch empfindlichen Direktivität ausgerichtet.

Aufgabe der Erfindung soll es sein, eine Antennenvorrichtung 10 derart zu gestalten, dass bei jeder beliebigen Position und Ausrichtung möglichst schnell und sicher eine drahtlose Kommunikation mit dem RFID/NFC-Tag 12 ermöglicht werden kann.

In der Figur 2 ist in einem Blockschaltdiagramm schematisch ein erstes Ausführungsbeispiel einer Antennenvorrichtung 10 dargestellt. Diese umfasst eine Antenneneinrichtung 14, die mindesten eine Antenneneinheit 22, insbesondere eine Gruppe von Antenneneinheiten 22 umfasst. Die Antenneneinheit 22 umfasst zwei Antennenschleifen 24, kann aber auch eine oder mehrere Antennenschleifen 24 umfassen. Die Antenneneinheit 14 ist an einer Antennenumschaltmatrix 36 angeschlossen. Hierzu ist jede Antennenschleife 24 mit einem Antennenschaltelement 38 der Antennenumschaltmatrix 36 verbunden, um selektiv ein- und ausgeschaltet, das heißt gekoppelt oder entkoppelt beziehungsweise aktiviert oder deaktiviert zu werden. Eine Steuerung der Antennenumschaltmatrix 36 erfolgt über eine Steuerungseinheit 40, die mit der Antennenumschaltmatrix 36 über eine Schaltsignalverbindung 48 verbunden ist. Die Steuerungseinheit 40 steuert das Zu- oder Abschalten der einzelnen Antennenschleifen 24 der Antenneneinheiten 22. Jedes Antennenumschaltelement 38, das heißt im aktivierten Zustand jede Antennenschleife 24, ist über eine weitere RF-Signalverbindung mit einem Impedanzanpassungsnetzwerk 32 verbunden, wobei im Impedanzanpassungsnetzwerk 32 für jede Antennenschleife 24 eine hierzu abgestimmte Antennenanpassungseinheit 34 eingerichtet ist. Die Reihenfolge der Anordnung von Impedanzanpassungsnetzwerk 32 und Antennenumschaltmatrix 36 kann vertauscht sein, sodass zunächst über die Antennenumschaltmatrix 36 die einzelnen Antennenschleifen 24 zu- oder abgeschaltet werden und hiernach das Impedanzanpassungsnetzwerk 32 eingeschaltet ist, wonach unmittelbar die Antenneneinrichtung 14 angeordnet ist.

Im vorliegenden Ausführungsbeispiel 10 ist das Impedanzanpassungsnetzwerk 32 über weitere RF-Zuführungsleitungen mit einer RFID/NFC-Kommunikationseinheit 42 verbunden. Diese generiert Stromimpulse zur energetischen Versorgung der RFID-NFC-Tags 12 mittels induktiver Kopplung und sendet und empfängt elektromagnetische Sendesignale zur Datenkommunikation mit dem darin untergebrachten Datenchip. Die RFID/NFC-Kommunikationseinheit 42 ist über eine Steuersignalverbindung 44 mit der Steuerungseinheit 40 verbinden. Zur Suche nach einer bestmöglichen Datenkommunikation, die in der Regel über eine einzelne Antennenschleife 24 mit dem RFID/NFC-Tag 12 erfolgt, schaltet die Steuerungseinheit 40 verschiedenen Antennenschleifen 24 der Antenneneinheiten 22 der Antenneneinrichtung 14 selektiv oder kombinatorisch durch, bis eine bestmögliche Kommunikation etabliert werden kann. Die RFID/NFC-Kommunikationseinheit 42 liefert die RF-Signale über das Impedanzanpassungsnetzwerk 32 und über die Antennenumschaltmatrix 36 an die Antenneneinrichtung 14. Dabei werden so lange die einzelnen Antenneneinheiten 22 beziehungsweise Antennenschleifen 24 durchgeschaltet, bis eine bestmögliche Verbindung eingestellt wird, wonach die vermutliche Lage und Orientierung des RFID/NFC-Tags 12 ermittelbar ist.

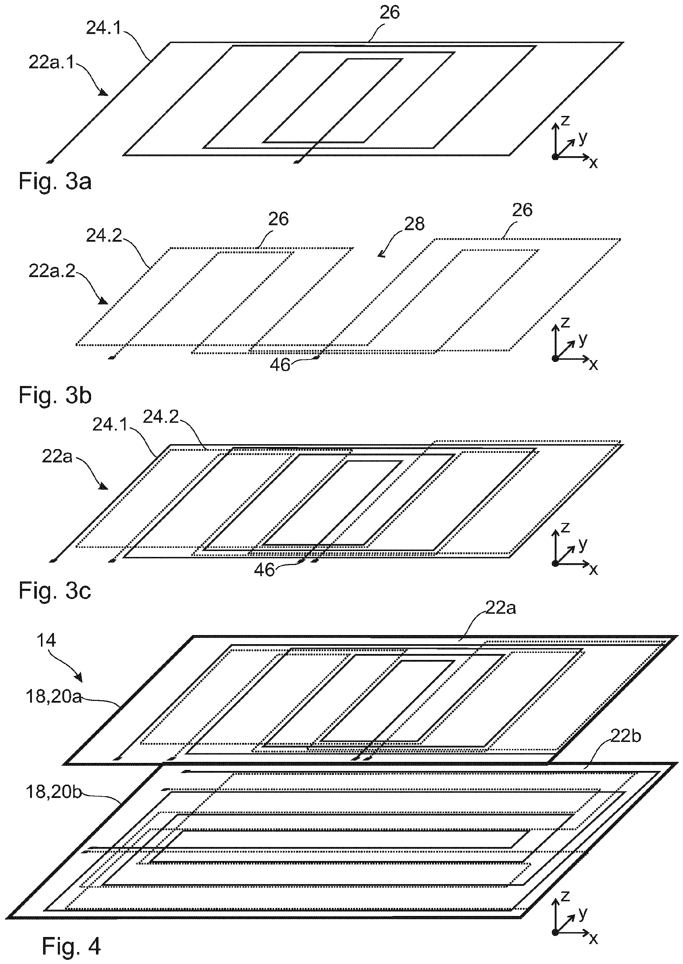

In der perspektivisch dargestellten Ausführungsform einer Antenneneinheit 22a in den Figuren 3a bis 3c umfasst die Antenneneinheit 22a zwei Antennenschleifen 24.1 und 24.2, die als 22a.1 der Antenneneinheit und 22a.2 der Antenneneinheit bezeichnet sind.

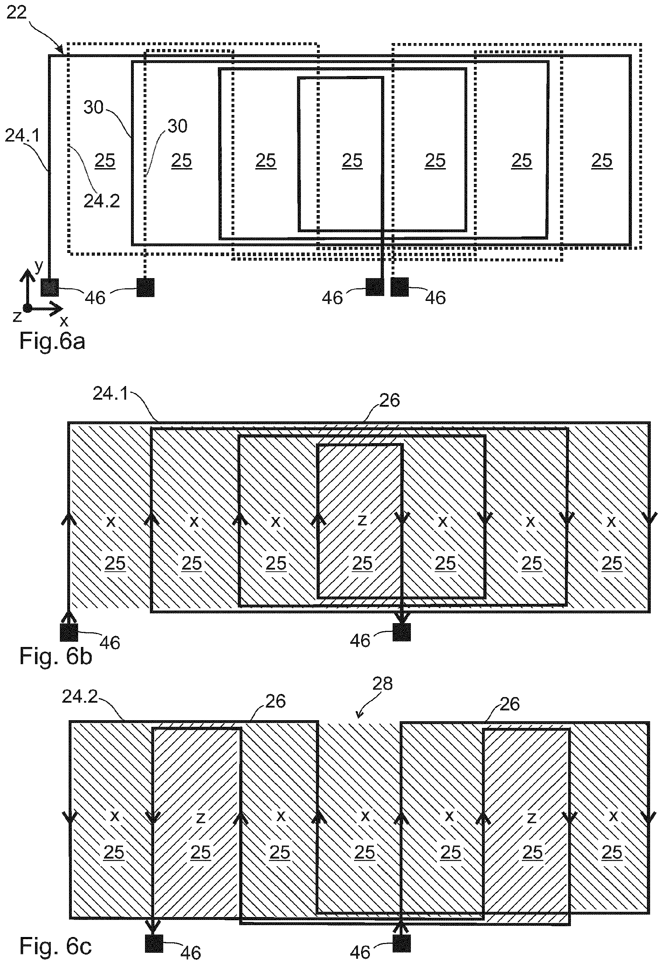

Die in Figur 3a dargestellte erste Antennenschleife 24.1 weist einen im Wesentlichen spiralförmigen Schleifenabschnitt mit sieben Bereichen auf, der in einer sich rechteckförmigen verjüngenden Schleife darstellt, wobei die in Y-Richtung ausgerichteten Schleifensegmente äquidistant beabstandet zueinander sind und die in X-Richtung geführten Schleifensegmente sehr dicht benachbart beieinander geführt sind. Die einzelnen Abstände der Schleifensegmente können je nach Anwendungsfall individuell optimiert werden. Hierdurch wird ermöglicht, dass im zentralen Bereich 25 die Antennenschleife 24.1 ein in Z-Richtung orientiertes magnetisches Feld bei Stromfluss einstellbar ist, wobei orthogonal hierzu ein in X-Richtung ausgerichtetes Feld durch die einzelnen, in Y-Richtung ausgerichteten, Strompfade einstellbar ist, siehe hierzu die Darstellung der Fig. 6a.

In Figur 3b ist die zweite Antennenschleife 24.2 in Form einer Doppelspirale ausgeformt, diese ist in Fig. 6c in Draufsicht gezeigt, wobei beginnend mit dem Schleifenanfang zunächst ein innerer Bereich 25 einer linken und rechten Schleife ausgeführt wird und anschließend ein äußerer Bereich 25 der linken und rechten Schleife ausgeführt wird, so dass sich formkungruent zur Antennenschleife 24.1 ebenfalls sieben Bereiche 25 ausbilden. Hierdurch wird ermöglicht in den beiden Schleifenbögen links und rechts in X-Richtung gesehen dargelegten Doppelschleifen von Bereichen 25 mit einem in Z-Richtung orientierten Magnetfeld herzustellen, sowie ebenfalls durch die in X-Richtung beabstandeten und in Y-Richtung geführten Leiterabschnitte Bereiche 25 mit einen in X-Richtung orientierten Magnetfeld auszubilden. Die in X-Richtung geführten Leiterabschnitte sind eng benachbart, so dass sich dort kein wesentliches in Y-Richtung orientiertes Magnetfeld ergibt. Positioniert man beide Antennenschleifen 24.1 und 24.2 in Figur 3c aufeinander, so ergibt sich die Antenneneinheit 22a, wobei je nach Bestromung der Antennenschleife 24.1 oder 24.2 ein im zentralen Bereich 25 orientiertes oder in den beiden randwärts orientierten Bereichen 25 der Antenneneinheit 22a orientiertes Z-Magnetfeld ergibt. Dabei überlappen sich, wie in Fig. 6a dargestellt, zugeordnete Bereiche 25 der Antennenschleife 24.1 und der Antennenschleife 24.2 deckungsgleich, so dass in allen Bereichen je nach Bestromung ein in X- oder in Z-Richtung ausgerichtete Direktivitätsachse ausbildbar ist. Beide Antennenschleifen ermöglichen weiterhin ein in X-Richtung orientiertes Magnetfeld. Die in Figur 3c dargestellte Antenneneinheit 22a dient dazu, ein in Z- als auch in X-Richtung orientiertes Magnetfeld zur Detektion einer Ausrichtung eines RFID/NFC-Tags in X- oder Z-Richtung zu erfassen.

Kombiniert man zur Antenneneinheit 22a eine weitere, gleichartig aufgebaute Antenneneinheit 22b, die abweichend dazu um 90° gedreht und ansonsten gleich aufgebaut ist, so ergibt sich die in Figur 4 dargestellte Antenneneinrichtung 14, die die beiden Antenneneinheiten 22a und 22b umfasst. Diese sind gleichartig aufgebaut, und unterscheiden sich nur in eine um 90° um die Z-Achse gedrehte Orientierung. Beide Antenneneinheiten 22a, 22b werden in eine X/Y-Achsenebene 18, die beispielsweise auf einem PCB 20 definiert ist, eingesetzt. Dabei können beispielsweise beide Antenneneinheiten 22a, 22b auf den beiden gegenüberliegenden Seiten eines PCBs 20 aufgebracht sein, oder innerhalb eines vierlagigen Aufbaus eines PCBs angeordnet sein, oder sich beispielsweise aus einzelnen, umschaltbaren Kontaktbahnen ergeben, die je nach Bedarf zu beliebig verschaltbaren Antennenschleifen zusammengeschaltet werden können.

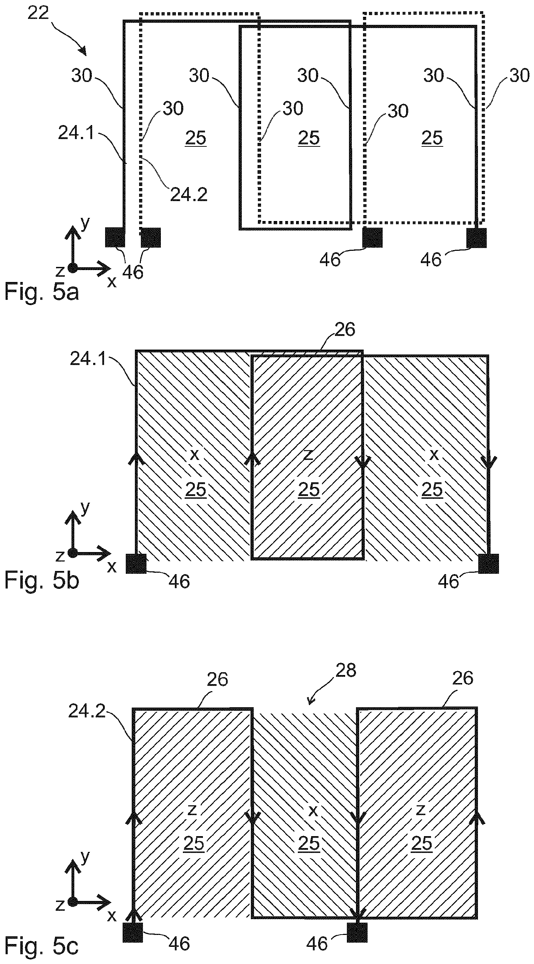

Die Figur 5a bis 5c zeigen ein weiteres Ausführungsbeispiel einer Antenneneinheit 22, die aus zwei Antennenschleifen 24.1 und 24.2 zusammengesetzt ist. Jede Antennenschleife 24.1, 24.2. definiert drei Bereiche 25, die bei Bestromung entweder eine in X-Richtung oder in Z-Richtung orientierte Direktivitätsachse ausbilden. Die Antennenschleife 22 ist in Figur 5a dargestellt, die einzelnen Antennenschleifen 24.1 und 24.2 in den Figuren 5b beziehungsweise 5c. Die Antenneneinheit 22 ermöglicht eine Detektion einer RFID/NFC-Tags mit einer Direktivität entweder in X- oder in Z-Richtung. Sie besteht aus der Superposition eines in Figur 5b dargestellten spiralförmigen Schleifenabschnitt 26 der Antennenschleife 24.1 und einer doppelspiralförmigen Anordnung 28 der Antennenschleife 24.2. Insoweit überdecken sich X- ausgerichtete Bereiche der Antennenschleife 24.1 deckungsgleich mit Z-ausgerichteten Bereichen der Antennenschleife 24.2 und umgekehrt. Somit kann der gesamte darüber liegende Raumbereich homogen mit einer X- und einer Z-Direktivitätsrichtung erfasst werden. Die elektromagnetisch aktiven Bereiche 25 sind unterschiedlich schraffiert unter Angabe der Direktivitätsbereiche X und Z, die in Figur 5b und 5c für die beiden Antennenschleifen 24.1 und 24.2 dargestellt sind.

In der Figur 6a und 6c sind im Wesentlichen die in den Figuren 3a und 3b dargestellte perspektivische Ausführungsform einer Antenneneinheit 22 als Draufsicht im Detail dargestellt. Dabei zeigen die Figuren 6b und 6c den spiralförmigen Schleifenabschnitt 26 beziehungsweise doppelspiralförmigen Schleifenabschnitt 28 der beiden Antennenschleifen 24.1 und 24.2 und es sind jeweils sieben flächigen Bereiche 25, die eine Direktivität in X-Richtung beziehungsweise Z-Richtung erzeugen, dargestellt. Die Superposition der Antennenschleifen 24.1 und 24.2 ist in Figur 6a als Antenneneinheit 22 dargestellt, und ermöglicht eine umfassende Kommunikation mit einem RFID/NFC-Tags in einem beliebigen Raumbereich oberhalb der flächigen Ausdehnung dieser Antenneneinheit in X- und in Z-Richtung, dadurch, dass durch das Umschalten zwischen den beiden Antennenschleifen 24.1 und 24.2 sowohl eine X- als auch die Z-Direktivität in praktisch jedem Raumbereich eingestellt werden kann.

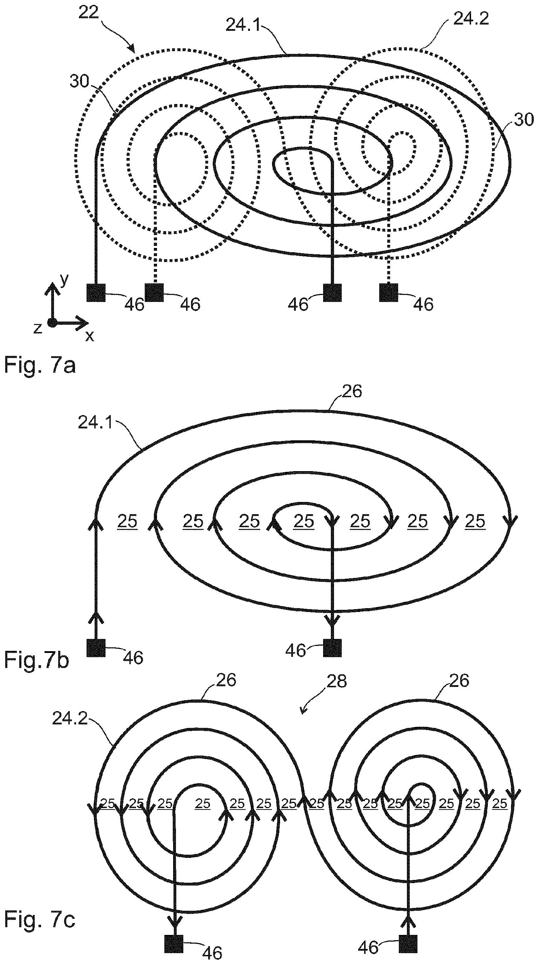

Eine weitere Ausführungsform einer Antenneneinheit 22 ist in den Figuren 7a bis 7c dargestellt. Dabei zeigt Figur 7a eine Superposition der in Figur 7b und 7c dargestellten Antennenschleifen 24.1 und 24.2. In Figur 7b ist ein spiralförmiger Schleifenabschnitt 26 in Form einer elliptischen Spirale dargestellt, die Anschlusskontakte 46 aufweisen. Figur 7c zeigt einen doppelspiralförmigen Schleifenabschnitt, der zwei gegensinnig gewickelte Schleifenbereiche 26 aufweist, die benachbart zueinander sind. Durch Superposition ergibt sich die Antenneneinheit 22 nach Figur 7a, die sowohl je nach Schaltungsvariante in dem mittleren Bereich 25 als auch in den beiden äußeren Bereichsgruppen 25 eine Z-Direktivität aufweisen kann, sowie je nach Ausführungsart der Schleife eine Direktivität in X- oder Y-Richtung ermöglicht. Mit Hilfe der elliptisch gebogenen Schleifenanordnung kann in einem engen Raumbereich sowohl die Orientierung als auch die Lage eines RFID/NFC-Tags 12 sicher bestimmt werden.

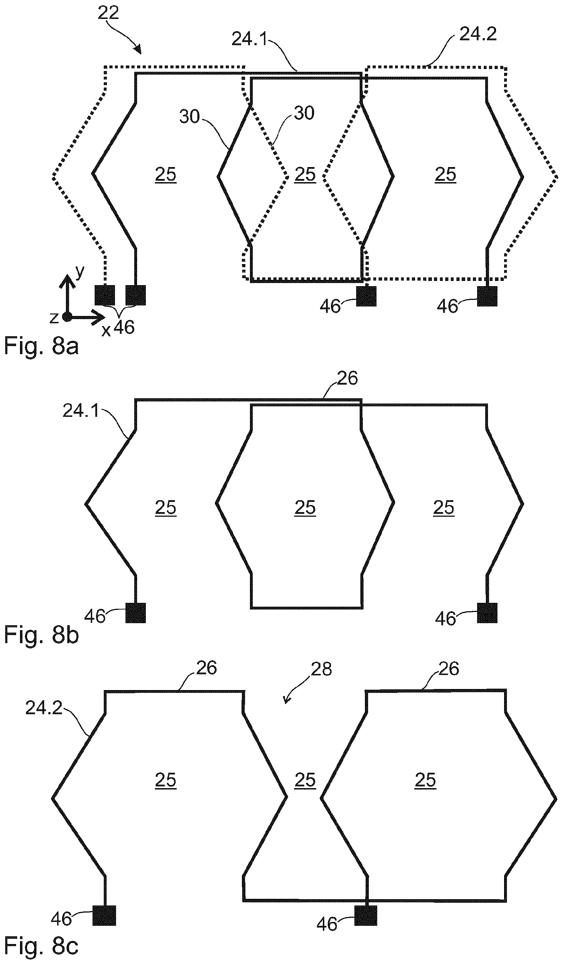

Eine weitere Ausführungsform einer Antenneneinheit 22 ist in den Figuren 8a bis 8c dargestellt. 8a zeigt die Superposition der in den Figuren 8b und 8c dargestellten Antennenschleifen 24.1 und 24.2, die als spiralförmiger Schleifenabschnitt 26 beziehungsweise doppelspiralförmiger Schleifenabschnitt 28 mit zwei benachbarten spiralförmigen Abschnitten 26 und jeweils drei elektromagnetisch aktiven Bereichen 25 ausgelegt sind. Die Doppelspirale 28 besteht aus zwei gegensinnig orientiert gewickelten, ovalförmigen Schleifenabschnitten 26, die benachbart sind. Die Form, die als Sechseck ausgeführt ist, kann beliebig an das jeweilige Einsatzgebiet für die Tag-Erkennung angepasst werden.

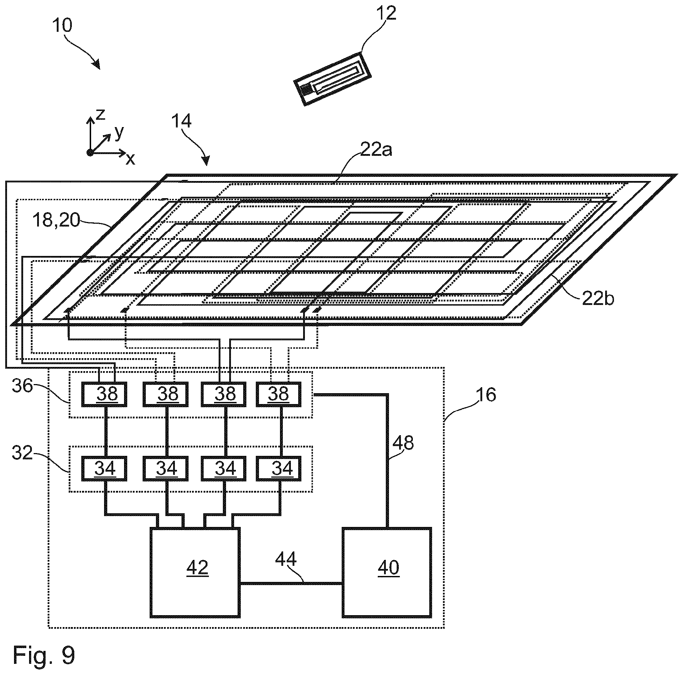

Schließlich zeigt Figur 9 ein Ausführungsbeispiel einer Antennenvorrichtung 12, zur Detektion einer beliebigen Lage und Orientierung eines RFID/NFC-Tags 12 oberhalb einer X/Y-Achsenebene 18 mittels einer in Figur 4 dargestellten Antenneneinrichtung 14. Diese ist an ein Ausführungsbeispiel einer Ansteuereinrichtung 16 angeschlossen, die im Wesentlichen dem in Figur 2 erläuterten Ausführungsbeispiel der Ansteuereinrichtung 16 gleicht.

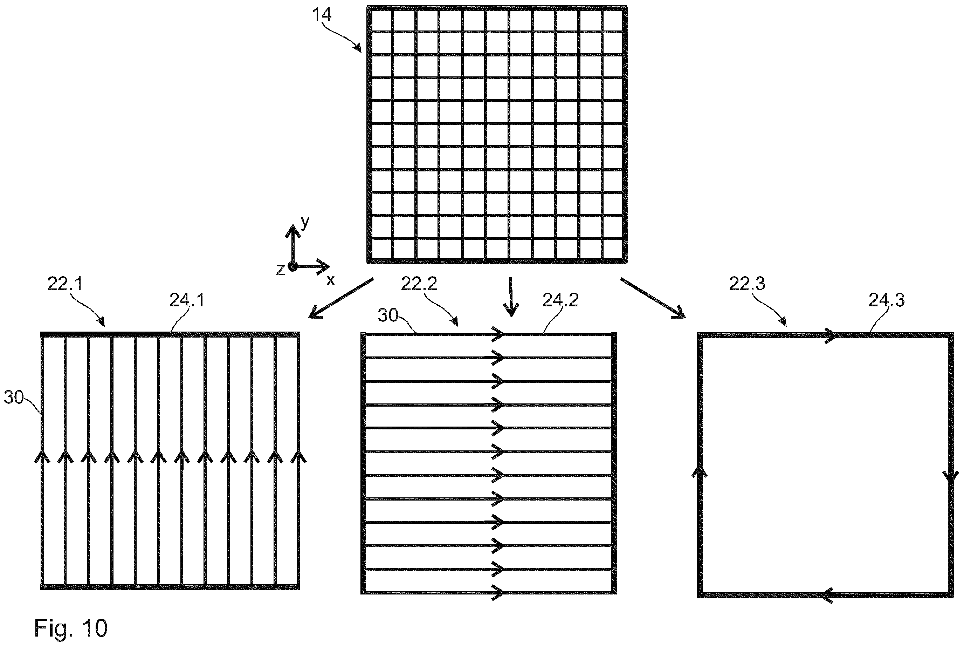

Schließlich zeigt Figur 10 ein weiteres Ausführungsbeispiel einer Antenneneinrichtung 14, die sich aus beliebig zusammenschaltbaren, einzelnen elektromagnetisch aktiven Leiterabschnitten 30 ergibt. Hierzu ist eine Vielzahl von sowohl in X- als auch in Y-Richtung ausgerichteten Leiterabschnitten 30 angeordnet, die über eine nicht dargestellte Schaltmatrix beliebig miteinander verbindbar sind. Hierzu können beispielsweise an Kreuzungspunkte elektromechanische oder elektrische Schaltelemente angeordnet sein. In einer Konfiguration können die elektromagnetisch in Y-Richtung orientierten Leiterabschnitte 30 zusammengeschaltet werden, sodass sich ein magnetisches Feld in X-Richtung ergibt, wie auf der linken unteren Seite der Figur 10 dargestellt. Schließlich werden die Leiterabschnitte 30 elektrisch so zusammengeschaltet, dass die Ströme in X-Richtung fliesen, wie in dem mittleren unteren Bereich der Figur 10 dargestellt, so ergibt sich ein magnetisches Feld, das in Y-Richtung ausgerichtet ist. Werden die Leiterabschnitte 30 spiralförmig oder quadratisch zusammengeschaltet, wie im rechten Abschnitt der Figur 10 dargestellt, so kann eine Orientierung in Z-Richtung erreicht werden. Somit können selektiv die einzelnen Leiterabschnitte derart zusammengeschaltet werden, dass in X/Y/Z-Richtung ein magnetisches Feld ausgerichtet werden kann, um ein RFID/NFC-Tag in beliebiger Richtung detektieren zu können. Bei geeigneter Schaltlogik und Kontaktierung ist es sogar möglich, Untergruppen oder Unterbereiche der Antenneneinrichtung 14 durch selektives Aktivieren oder Deaktivieren der einzelnen Leiterabschnitte 30 zur Orientierung in X-/Y- oder Z-Richtung zu aktivieren, sodass auch simultan komplexe Orientierungen einstellbar sein können. Allerdings ist die Impedanzanpassung hierzu relativ schwierig, und sollte auf die Vielzahl der verschiedenen Möglichkeiten angepasst werden.

Durch das neuartige Antennendesign und die neuartige Ansteuerung einer flachen Antennenbauform wird eine sichere Erkennung und Kommunikation einer Bewegung eines im Raum oberhalb der Antenneneinrichtung 14 sich bewegenden RFID/NFC-Tags 10 ermöglicht. Durch sich deckungsgleich überdeckenden Bereichen 25, die umschaltbare Direktivitätsachsen von einer In-Plane Orientierung in X- oder Y-Richtung und einer orthogonalen Z-Achse ermöglich, kann homogen der gesamte Raumbereich in allen drei Direktivitätsachsen homogen und lückenlos erfasst werden. Die Anordnung mehrere Antennen in unterschiedlichen Raumebenen ist nicht erforderlich und die Antennen kann platzsparend in einem flächigen Abschnitt beispielsweise in einem Scansystem einer Abrechnungskasse eines Einzelhandelsgeschäftes untergebracht werden. Beispielhafte Anwendungen können sowohl an Kassensystemen, als auch die Zuordnung von RFID/NFC-Tag indizierten Gütern mit Daten in einer Cloudanwendung sein, es sind allerdings eine Vielzahl weiterer Anwendungsmöglichkeiten wie beispielsweise Diebstahlerkennung, Lagerbestandserkennung und vieles weitere realisierbar.

### Bezugszeichenliste

- 10: Antennenvorrichtung
- 12: RFID/NFC-Tag
- 14: Antenneneinrichtung
- 16: Ansteuereinrichtung
- 18: X/Y-Achsenebene
- 20: ebene Platte, PCB - Printed Circuit Board
- 22: Antenneneinheit
- 24: Antennenschleife
- 25: Elektromagnetisch aktiver Bereich
- 26: spiralförmiger Schleifenabschnitt
- 28: Doppelspirale
- 30: elektromagnetisch aktiver Leiterabschnitt
- 32: Impedanz-Anpassungsnetzwerk
- 34: Impedanzanpassungseinheit
- 36: Antennenumschaltmatrix
- 38: Antennenschaltelement
- 40: Steuerungseinheit
- 42: RFID/NFC-Kommunikationseinheit
- 44: Steuersignalverbindung
- 46: Anschlusskontakt
- 48: Schaltsignalverbindung

## Patentansprüche

1. RFID/NFC-Antennenvorrichtung (10) zum Auslesen und/oder Kommunikation eines RFID/NFC-Tags (12) in einer beliebigen dreidimensionalen Position oder Ausrichtung, umfassend eine Antenneneinrichtung (14) und eine Ansteuereinrichtung (16), wobei die Antenneneinrichtung (14) in einer X/Y-Achsenebene (18) flächig ausgebildet ist, insbesondere auf einer ebenen Platte (20) in einer X/Y-Achsenebene (18) angeordnet ist, wobei die Antenneneinrichtung (14) zumindest eine Antenneneinheit (22), insbesondere zwei ineinander verschachtelt und / oder übereinander gestapelte Antenneneinheiten (22), umfasst, wobei die zumindest eine Antenneneinheit (22) zwei orthogonal zueinander ausgerichteten Direktivitätsachsen in X- und Z-Achsrichtung und / oder in Y- und Z-Achseinrichtung aufweist, **dadurch gekennzeichnet, dass** die zumindest eine Antenneneinheit (22) zumindest zwei, sich gegenseitig überdeckende Antennenschleifen (24) umfasst, wobei jede Antennenschleife (24) zumindest drei benachbarte und elektromagnetisch aktive Bereiche (25) der orthogonal zueinander ausgerichteten Direktivitätsachsen aufweist, wobei die Bereiche (25) jeder Antennenschleife durch einzelne Leiterabschnitte (30) der Antennenschleife (24) voneinander abgegrenzt sind, und sich zugeordnete Bereiche (25) der beiden Antennenschleifen (24) im Wesentlichen überdecken.

2. Antennenvorrichtung (10) nach Anspruch 1, **dadurch gekennzeichnet, dass** die Antenneneinrichtung (14) zumindest eine erste und eine zweite Antenneneinheit (22) umfasst, wobei die erste Antenneneinheit (22) Direktivitätsachsen in X- und Z-Achsrichtung und die zweite Antenneneinheit (22) Direktivitätsachsen in Y- und Z-Achsrichtung aufweist, wobei bevorzugt die erste und die zweite Antenneneinheit (22) auf einem ein- oder zweiseitig beschichtetem PCB (20) angeordnet sind.

3. Antennenvorrichtung (10) nach Anspruch 1 oder 2, **dadurch gekennzeichnet, dass** die Antennenschleifen (24) derart ineinander verschachtelt oder übereinander angeordnet sind, dass sich deren elektromagnetisch aktiven Bereiche mit orthogonal zueinander ausgerichteten Direktivitätsachsen zumindest teilweise überlappen.

4. Antennenvorrichtung (10) nach einem der vorhergehenden Ansprüche, **dadurch gekennzeichnet, dass** jede Antennenschleife (24) zumindest einen spiralförmigen Schleifenabschnitt (26) umfasst.

5. Antennenvorrichtung (10) nach Anspruch 4, **dadurch gekennzeichnet, dass** eine erste Antennenschleife (24) spiralförmig (26) und eine zweite Antennenschleife (24) doppelspiralförmig (28) mit gespiegeltem Windungsgang, die nebeneinander angeordnet sind, ausgeformt sind.

6. Antennenvorrichtung (10) nach einem der vorgenannten Ansprüche, **dadurch gekennzeichnet, dass** die Antenneneinrichtung (14) eine Antenneneinheit (22) mit einer Mehrzahl von elektromagnetisch aktiven Leiterabschnitten (30) umfasst, wobei die Leiterabschnitte (30) mittels Schaltelemente in zumindest zwei, insbesondere drei verschiedene Antennenschleifen (24) verschaltbar sind, die zumindest zwei, insbesondere drei zueinander orthogonale Direktivitätsachsen aufweisen.

7. Antennenvorrichtung (10) nach einem der vorgenannten Ansprüche, **dadurch gekennzeichnet, dass** die X/Y-Achsenebene (18) der flächigen Ausbildung der Antenneneinrichtung (14) gekrümmt oder abgewinkelt, insbesondere halbschalenförmig ist.

8. Antennenvorrichtung (10) nach einem der vorgenannten Ansprüche, **dadurch gekennzeichnet, dass** die Ansteuereinrichtung (16) ein Impedanz-Anpassungsnetzwerk (32), das eine Impedanzanpassung zumindest einer Antenneneinheit (22), insbesondere der zumindest zwei Antennenschleifen (24) einer Antenneneinheit (22), bereitstellt, umfasst, wobei bevorzugt das Impedanz-Anpassungsnetzwerke (32) für die zumindest eine Anteinneneinheit, insbesondere für die zumindest eine Antennenschleife (24), bevorzugt adaptiv einstellbare, Impedanzanpassungseinheiten (34) umfasst.

9. Antennenvorrichtung (10) nach einem der vorgenannten Ansprüche, **dadurch gekennzeichnet, dass** die Ansteuereinrichtung (16) eine Antennenumschaltmatrix (36) mit einer Steuerungseinheit (40) umfasst, die ausgelegt ist, zwischen Antenneneinheiten (22), insbesondere zwischen Antennenschleifen (24), umzuschalten.

10. Antennenvorrichtung (10) nach einem der vorgenannten Ansprüche, **dadurch gekennzeichnet, dass** die Ansteuereinrichtung (16) eine RFID/NFC-Kommunikationseinheit (42) umfasst, die eine Kommunikation mit dem RFID/NFC-Tag (12) über die Antenneneinrichtung (14) bereitstellt.

11. Antennenvorrichtung (10) nach Anspruch 9 und 10, **dadurch gekennzeichnet, dass** die RFID/NFC-Kommunikationseinheit (42) eine Steuersignalverbindung (44) für ein Steuersignal zur Auswahl einer optimierten Antennenkonfiguration der Antenneneinrichtung (14) an die Steuerungseinheit (40) bereitstellt, wobei bevorzugt das Steuersignal einer induktiven Kopplungsqualität zwischen Antenneneinrichtung (14) und NFC/RFID-Tags (12) entspricht.

12. Antennenvorrichtung (10) nach einem der vorgenannten Ansprüche, **dadurch gekennzeichnet, dass** mehrere, flächig und/oder abgewinkelt benachbarte Antenneneinrichtungen (14), und zumindest eine, insbesondere mehrere Ansteuereinrichtungen (16), umfasst sind.

13. Verfahren zum Betrieb einer Antennenvorrichtung (10) nach einem der vorgenannten Ansprüche, **dadurch gekennzeichnet, dass** die Ansteuereinrichtung (16) ein sequentielles oder kombinatorisch selektives Umschalten von Antenneneinheiten (22) der Antenneneinrichtung (14), insbesondere von Antennenschleifen (24) einer Antenneneinheit (22), durchführt, bis eine optimierte induktive Kopplung mit dem NFC/RFID-Tag (12) in beliebiger Lage und Position über der X/Y-Achsenebene (18) erreicht ist.

14. Verfahren nach Anspruch 13, **dadurch gekennzeichnet, dass** eine parametrisierte, insbesondere rekursive Impedanzanpassung durch das Impedanz-Anpassungsnetzwerk (32) durchgeführt wird.

15. Verfahren nach Anspruch 13 oder 14, **dadurch gekennzeichnet, dass** das sequentielle oder kombinatorisch selektives Umschalten in einer Reihenfolge erfolgt, die durch eine erhöhte Wahrscheinlichkeit bisheriger optimierter Kopplungen bestimmt ist, oder die auf Basis einer optischen Lagenerkennung bestimmt ist.
